(19) Europäisches Patentamt
European Patent Office
Office européen des brevets

(11) **EP 1 535 531 A1**

(12) **EUROPEAN PATENT APPLICATION**
published in accordance with Art. 158(3) EPC

(43) Date of publication:
01.06.2005 Bulletin 2005/22

(51) Int Cl.$^7$: **A45D 20/06**

(21) Application number: 03791284.7

(86) International application number:
**PCT/JP2003/010746**

(22) Date of filing: 26.08.2003

(87) International publication number:
**WO 2004/019725 (11.03.2004 Gazette 2004/11)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: 28.08.2002 JP 2002249347

(71) Applicant: **RE-TEC Inc.**
**Ohtsuki-shi, Yamanashi 401-0021 (JP)**

(72) Inventors:
• **KOKUO, Shinji**
**Chiyoda-ku, Tokyo 101-0021 (JP)**
• **IWAKI, Katsunori**
**Chiyoda-ku, Tokyo 101-0021 (JP)**
• **FUJIWARA, Akinobu**
**Ohtsuki-shi, Yamanashi 401-0021 (JP)**

(74) Representative: **Grünecker, Kinkeldey, Stockmair & Schwanhäusser Anwaltssozietät**
**Maximilianstrasse 58**
**80538 München (DE)**

(54) **GAS COMBUSTION TYPE PORTABLE DRYER CAPABLE OF GENERATING NEGATIVE ION AND METHOD OF GENERATING NEGATIVE ION IN THE DRYER**

(57) A portable drier 1 includes a gas tank 25 in which fuel gas is stored, a combustor 11 combusting fuel gas supplied from the gas tank 25, a blower 17 through which air, heated in the combustor 11 is caused to flow to an outlet, a power supply rotating a motor 19 of the blower 17, and an ignition device 9 igniting fuel gas. The combustor 11 includes an ejector 7 for allowing primary air to be drawn due to a negative pressure created by a flow speed of fuel gas supplied from the gas tank 25. A mixture gas ejecting from a wick is combusted in a primary combustion chamber 55 to generate combustion gas, which is supplied to a secondary combustion chamber 57 in which combustion gas is mixed with secondary air for complete combustion.

FIG.3

EP 1 535 531 A1

## Description

## TECHNICAL FIELD

The present invention relates to a gas combustion type hair drier utilizing a combustion flame of liquefied petroleum gas (hereinafter referred to as LPG), as a heat source, and having a battery and blower while generating negative ions, and a method of generating the negative ions.

## BACKGROUND ART

As shown in FIGS. 1 and 2, a gas combustion type hair drier 101, disclosed in Japanese Patent Application No. 2000-266409, is comprised of a cylindrical case 103 internally provided with a premixing chamber 105 in which LPG is mixed with air, a combustion dish 107 having a porous combustion plate through which a mixed gas, resulting from the premixing chamber 105, is blown out, an ignition plug 109 igniting the mixed gas ejecting from the combustion dish 107, a primary combustion chamber serving as a combustion cylinder in which the mixed gas is combusted, a secondary combustion chamber 115 adapted to achieve smokeless combustion with a combustion catalyst at a front of the primary combustion chamber, and a heat exchanger 117 with a star-shaped peripheral wall formed between peripheries of the primary combustion chamber 111 and the secondary combustion chamber 103.

The premixing chamber 105 has a rear end wall formed with a plurality of air holes 119 for introducing atmospheric air. The combustion catalyst 113 employs a ceramics, such as porous alumina of porous cordierite, as raw material that generally serves as a carrier.

Disposed in a rear area of the cylindrical case 103, that is, in an area at the back of the premixing chamber 105 is a blower including a direct current motor 121 and a an axial flow fan 123 drivably rotated by the direct current motor 121 to fed air, needed for combustion in the cylindrical case 103, and a large volume of hot blast.

An LPG container, which stores LPG to be supplied to the premixing chamber 105, and batteries (mainly composed of primary batteries) serving, as a power supply for the ignition plug 109, are accommodated in a handle (not shown) connected to the cylindrical case.

With such a hair drier 101, since air needed for combustion of LPG is taken in from the plurality of air holes 119 of the premixing chamber 105 and partly obtained from a portion of a blast volume resulting from the blower 125 necessary for generating a large volume of hot blast, a shortage occurs in air necessary for combustion of LPG to cause imperfect combustion in the presence of a drop in the blast volume due to a drop in a battery voltage. This results in a probability wherein oxygenless mixed gas (unburned gas) passing to the outlet 127 (exhaust port) forms a flame for combustion in contact with atmospheric air.

Further, with the combustion catalyst 13, which is disposed as a means for achieving efficient combustion in a flameless fashion, developed heat is accumulated in a center of the combustion catalyst 113 and heat exchange occurs between the combustion catalyst 113 and the blast only in the heat exchanger 117 around the combustion catalyst 113. Thus, no heat, accumulated in the center of the combustion catalyst 113 susceptible to the maximum temperature rise, is contributed for heat exchange, causing issues with extremely deteriorated efficiency on experimental tests.

Furthermore, in actual practice, due to the outlet 127 having a surface area forming a portion of the heat exchanger 117, the heat exchanger 117 has a reduced surface area to create a loss in pressure in the blast, resulting in issues with a drop in the blast volume.

Additionally, with the hair drier 102 mentioned above, no combusting portion can be rapidly cooled even in a stop of supply of LPG after the use, resulting in issues with a difficulty in touching the hair drier 101 due to residual high temperatures even after an elapse of a fairly long time for 20 minutes.

Also, there are some improved structures in one of which the blower 125 is automatically operated for cooling the high temperature condition even when the supply of LPG is stopped. Portable equipment, which needs to stand by until the hair drier 101 is cooled after the use thereof has been terminated, encounters issues with inconvenience and anavailability.

Further, even with a cordless hair drier of a portable type, there is a need for the hair drier to have a heat value of approximately 390Kcal/H as combustion energy equivalent in electric power of 450 W/H. For this reason, the hair drier 101 needs to be formed in a size two times that of the usual electric type hair drier, causing issues with a lack in practicality of the portable equipment.

Further, nowadays, negative ions have been considered to be advantageous for a health of human body in the presence of a sense of exhilaration and relaxed feeling and various medical befits have been verified to get a lot of attention. Therefore, research and development work has been undertaken to provide a hair drier adapted to generate negative ions when blowing hair.

Hair driers, disclosed in Japanese Patent Applications No. 2002-65344 and No. 2002-191426, have structures each of which includes normal hair drier and a negative ion generator including electronic component parts, such as a transformer, composed of a primary winding and a secondary winding, capacitors and resistors, and component parts such as negative ion generating needle.

However, since these hair driers include the usual hair driers on which the negative ion generators are mounted, respectively, the devices become complex in construction with increased weights and connected to external power supply through power chord. Thus, these devices are not of the portable types and encounter with issues with the formation of less amount of negative ions.

## DISCLOSURE OF INVENTION

This invention has been completed to address the issues set forth above and has an object to provide a combustion type hair drier, which enables combustion performance and heat exchange rate to be improved so as not to allow a combustion flame, serving as a heat source, resulting from LPG to eject outward while enabling reduction in pressure loss in blast and allowing a large number of negative ions to be generated without mounting a negative ion generator separate from a usual portable hair drier, and a method of generating negative ions in the drier.

To achieve the above object, a first aspect of a gas combustion type hair drier comprises a gas tank in which fuel gas is stored, a combustor including a primary combustion chamber, combusting mixed gas with the fuel gas, supplied from the gas tank, and primary air, and a secondary combustion chamber to which gases, resulting from combustion in the primary combustion chamber, and secondary air are supplied for combustion, a blower blowing off air, heated in the combustor, to an outlet of a tubular casing in which the combustor is mounted, a power supply rotating a motor of the blower, an ignition device igniting the fuel gas, and an ejector that draws the primary air into a gas flow path, leading from the gas tank to the combustor, due to a negative pressure caused by a flow speed of the fuel gas supplied to the combustor.

A second aspect of the present invention provides a gas combustion type hair drier which comprises a gas tank in which fuel gas is stored, a combustor combusting the fuel gas supplied from the gas tank, a blower blowing off air, heated in the combustor, to an outlet of a tubular casing in which the combustor is mounted, a power supply rotating a motor of the blower, an ignition device igniting the fuel gas, a magnet unit operative to keep a supply cf the fuel gas to a gas flow path leading from the gas tank to the combustor, an ignition detector detecting an ignited condition depending on an external wall temperature of the combustor, an overheat detector detecting an overheated condition of hot blast resulting from the combustion chamber, and a switching controller operative to control the magnet unit and operation of the blower in response to detection signals delivered from the ignition detector and the overheat detector.

In a third aspect of the present invention, there is provided a method of generating negative ions in a gas combustion type hair drier which has a gas tank in which fuel gas is stored, a combustor including a primary combustion chamber, which combusts mixed gas with the fuel gas, supplied from the gas tank, and primary air, and a secondary combustion chamber for combustion of gases, resulting from combustion in the primary chamber, and supplied secondary air, and an ignition device by which the fuel gas is ignited, the method comprising mixing the fuel gas and the primary air to form the mixed gas for ejecting the same to the primary combustion chamber, permitting the ejected mixed gas to be combusted in the primary combustion chamber with the ignition device, permitting gases, resulting from combustion in the primary chamber, to be supplied to the secondary combustion chamber and mixed with the secondary air for complete combustion while causing turbulent flows to occur, and activating molecular motions of a large number of water molecules generated upon combustion of the fuel gas thereby generating the negative ions.

## BRIEF DESCRIPTION OF DRAWINGS

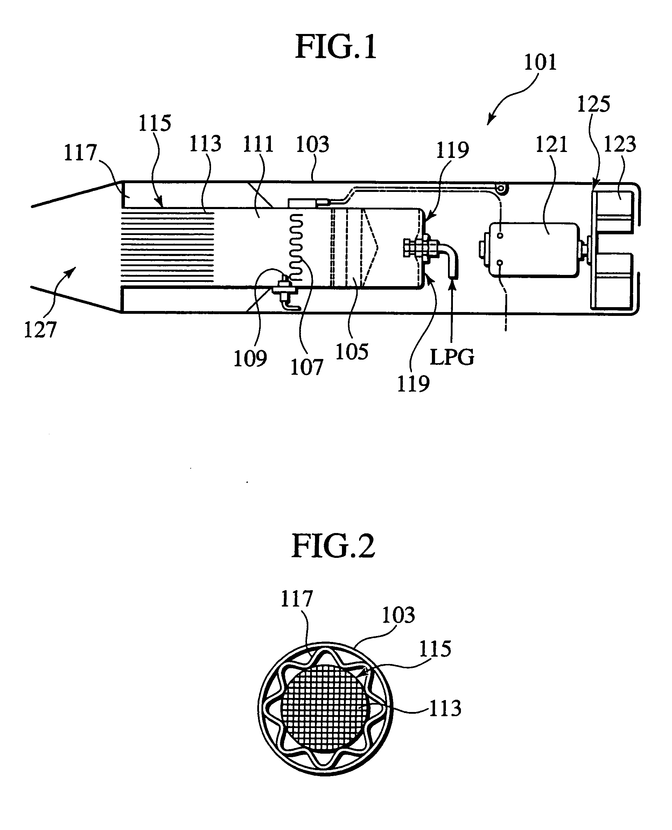

FIG. 1 is a longitudinal cross-sectional view of a combustion type hair drier of the related art.
FIG. 2 is a left side view of FIG. 1.
FIG. 3 is a longitudinal cross sectional view of a combustion type portable hair drier of an embodiment according to the present invention.
FIG. 4 is an enlarged side view of a combustor of the hair drier shown in FIG. 3.
FIG. 5 is a left side view of FIG. 4.

## BEST MODE FOR CARRYING OUT THE INVENTION

Hereinafter, various embodiments according to the present invention are described below with reference to the accompanying drawings.

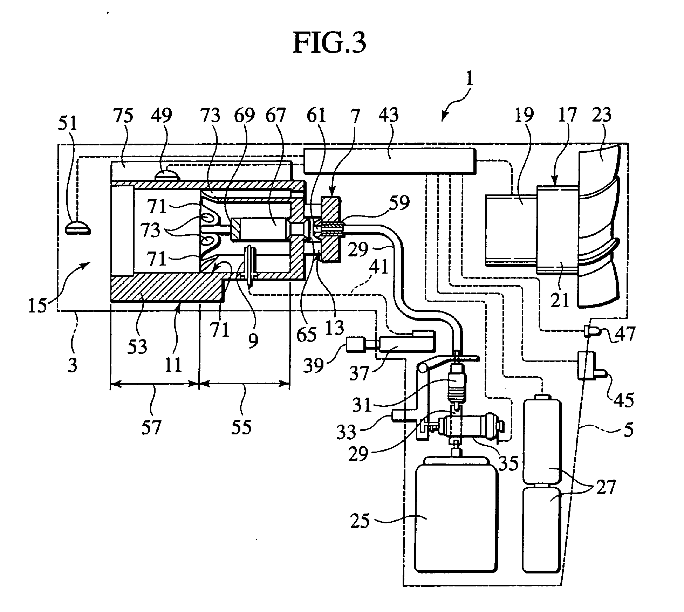

FIG. 3 is a longitudinal cross-sectional view of a gas combustion type portable hair drier of the presently filed embodiment according to the present invention.

The gas combustion type portable hair drier1 of the presently filed embodiment is comprised of a casing 3, formed in a cylindrical shape and an elongated handle 5 extending in a direction substantially intersecting a longitudinal direction of the casing 3. The handle 5 is located on a sidewall of the casing 3.

Internally received in the casing 3 are an ejector 7 to allow fuel, such as LPG, and air to mix with each another to form mixed gas, an ignition device such as an ignition plug 9 for igniting mixed gas resulting from the ejector 7, and a combustor 11 that allows mixed gas, ignited with the ignition plug 9, to be combusted. Also formed in the ejector 7 are air intake ports 13 through which primary air is introduced to an interior of the ejector 7.

Further, internally mounted in the casing 3 is a blower 17 that is located rearward (rightward in FIG. 3) of the ejector 7 to blow out air, heated by the combustor 11, to an outlet 15 of the casing 7. The blower 17, installed on an inner wall surface of the casing 7 at a rear side thereof, includes a direct current motor 19, a bracket 21 formed with air flow passages, and an axial flow fan 23 fixedly mounted on a rotary shaft of the direct current motor 19 for blowing out a wind.

Also, a rear end (rightmost end in FIG. 3) of the casing 3 is covered with a wall surface formed with a large number of apertures through which air is drawn for the sake of safety, and detachably mounted to a forward end (leftmost end in FIG. 3) of the casing 3 is a nozzle (not shown) serving as an outlet for hot blast.

Internally mounted in the handle 5 are a gas tank 25 that accumulates fuel gas, such as LPG, to supply fuel gas to the ejector 7, and a power supply, such as two dry batteries 27 detachably received in a battery case for rotating the direct current motor 19 of the blower 17.

Further, the gas tank 25 has a configuration to be refilled with LPG via a charge valve (not shown) fitted to a bottom wall of the handle 5. Communicating with an upper end of the gas tank 25 is a gas supply pipe 29 that serves as a gas flow passage for supplying LPG to the ejector 7. Disposed in a midcourse of the gas supply pipe 29 is a control valve 31 that plays a role as a gas opening and closing valve.

Furthermore, an operating lever 33, for opening and closing the control valve 31, protrudes from a sidewall (on a left sidewall in FIG. 3) of the handle 5 and is rotatably supported in an inside of the handle 5 in clockwise or counterclockwise directions in FIG. 3. The operating lever 33 has an upper end engaging with the control valve 31, to be movable in upward or downward directions for opening or closing the control valve 31, and a lower portion that is detachably connected to a magnet unit 35 disposed inside the handle 5.

Also, the magnet unit 35 serves to attract the lower portion of the operating lever 33, when it is depressed, to maintain the control valve 31 in an opened state.

In addition, incorporated in the handle 5 is a piezoelectric element 37, forming a part of an ignition device, which is connected to an ignition knob 39 that protrudes outward from the sidewall of the handle 5 to generate a high voltage electricity to be applied to the igniting piezoelectric element 37. The igniting piezoelectric element 37 is connected through a wiring 41 to the ignition plug 9.

Further, disposed inside the casing 3 is a switching amplifier 43, serving as a switch controller, which executes "ON/OFF" controls of the magnet unit 35 and the direct current motor 19, and the switching amplifier 43 is electrically connected to the batteries 27, serving as the power supply, the magnet unit 35 and the direct current motor 19.

Furthermore, mounted to the sidewall (on the right side in FIG. 3) of the handle 5 are a micro switch 45 that delivers a blast start signal for the blower 17 to the switching amplifier 43 and an ignition confirmation LED 47 that provides a display of the presence of the ignition of combustion gas in the combustor 11. Also, mounted on an outer wall of the combustor 11 is an ignition sensor 49, which serves as an ignition detector for detecting an ignition state depending on outer wall temperatures. Moreover, disposed on an inner wall of the casing 3 in an area close proximity to the outlet of the combustor 11 is a hot blast overheat sensor 51 that serves as an overheat detector for detecting an overheat condition of a hot blast generated by the combustor 11. The ignition sensor 49 and the overheat sensor 51 are electrically connected to the switching amplifier 43.

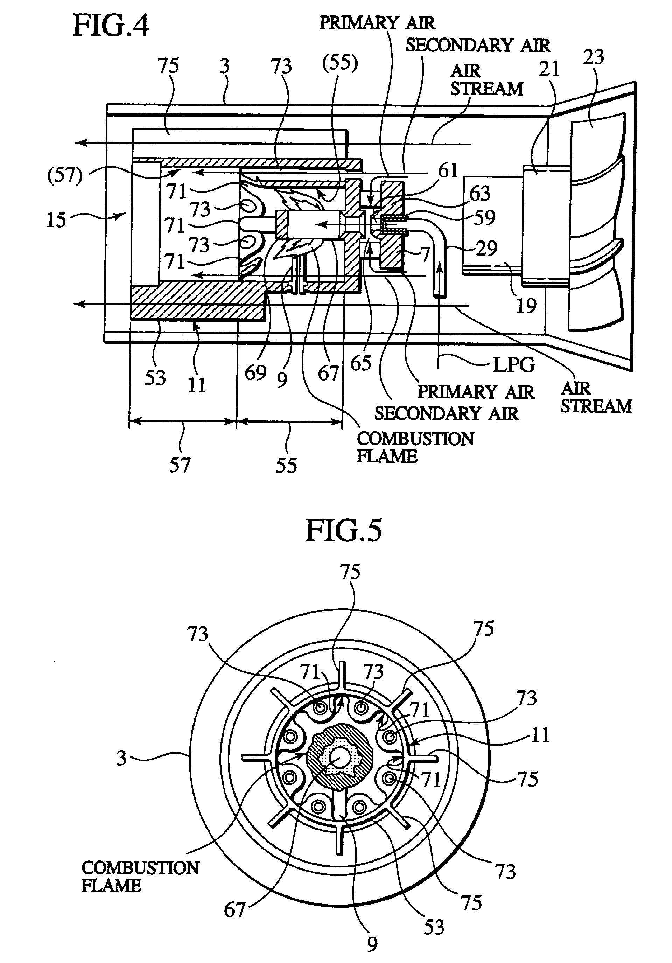

FIG. 4 is an enlarged side view of the combustor of the hair drier shown in FIG. 3 and FIG. 5 is a left side view of the combustor shown in FIG. 4.

The chamber 53 of the combustor 11, shown in FIG.4 and made of aluminum (formed by die casting), is located between the blower 17 and the outlet 15. Further, as shown in FIG. 5, with the presently filed embodiment, the combustor 11 has a substantially circular and tubular body in cross section, taken on line, perpendicular to a longitudinal axis of the combustor 11. The combustor 11 is internally formed with a primary combustion chamber 55 disposed rightward in FIG. 4, a secondary combustion chamber 57 located in a forward area (on a left side in FIG.4) of the primary combustion chamber 55, and the ejector 7 disposed in a rear (on a right side in FIG. 4) of the primary combustion chamber 55.

The ejector 7 has a nozzle 9 that is supplied with LPG from the gas tank 25 through the gas supply pipe 29 to allow LPG to be injected to the primary combustion chamber 55. The nozzle 59 has a distal end formed with an injection port 61 formed in a pinhole shape with an inner diameter of $\phi$ 60 $\mu$m to $\phi$ 200 $\mu$m and is internally provided with a filter (not shown) that removes impurities and dusts that would block the injection port 61. Also, this filter may be formed of sintered metal with pinholes with a diameter, of for instance, 10 to 30 $\mu$m.

Further, the injection port 61 is formed as an orifice in a discoid pinhole disk 63 at a substantially central area thereof to allow LPG to be ejected at a speed as high as sonic speed in a thin stream.

Disposed in front of the nozzle 59 is a mixer 65 that allows LPG to mix with primary air to form the mixed gas that is introduced into the combustor 11 and to this end, the mixer 65 has a sidewall formed with air intake openings 13 through which air is drawn. Accordingly, as a negative pressure occurs in the mixer 65 due to mixed gas ejecting from the nozzle 59, primary air is drawn and mixed with mixed gas that is delivered to a front gas combustor such as, for instance, a wick 67. This is called as an ejector effect. Also, regulating surface areas of the air intake openings 13 enables a flow rate of primary air to be adjusted.

The wick 67 is made of SUS-wire mesh with 50 to 150 meshes and takes the form of a cylindrical configuration to serve as a gas combustor and disposed in a substantially center area of the primary combustion chamber 55 of the combustor 11 on a right side thereof in FIG 4. The mixed gas between LPG and air is discharged through the wire mesh set forth above. Also, mounted to a front end of the wick 67 is a straight movement restrictor 69 that restricts straight movement of the mixed gas discharged from the mixer 65 to promote outflow of the mixed gas mainly in a sidewise direction. Upon ignition of the mixed gas, a flame occurs in a blue color and takes a circular form.

Further, the ignition plug 9 is disposed in an inside of the combustor 11 in a position close to a side surface of the wick 67 at a front end thereof. The ignition plug 9 is supplied with high voltage electricity from the piezoelectric element 37 to emit sparks at a distal end of the ignition plug 9 toward the wick 67. Then, due to the sparks, the mixed gas ejecting from the wick 67 catches fire, thereby combusting the mixed gas.

Formed on an inner wall of the primary combustion chamber 55 are a plurality of recessed portions 71, extending in fore and aft directions, which are equidistantly spaced in a circumferential direction and extend in a radial direction about a center of the wick 67 as shown in FIG. 5. In addition, disposed in spaces between the adjacent recessed portions 71 in a wall of the primary combustion chamber 55 is a plurality of secondary air delivery passages 73 through which secondary air is supplied to a secondary combustion chamber 57.

Accordingly, due to flow of air streams passing from the axial flow fan 23 through the secondary air delivery passages 73, the primary combustion chamber 55 is reduced in temperature, upon which the air streams are introduced to the secondary combustion chamber 57 as secondary air. That is, secondary air has an effect of lowering the temperatures of the primary combustion chamber 55 and an effect of improving combusting performance in the secondary combustion chamber 57. In this connection, tests for measuring efficiencies in combusting performance and heat exchange of hair driers that incorporated 4 to 12 secondary air delivery passages 73 were conducted and it revealed that the use of eight secondary air delivery passages 73 exhibited favorable results with a successful compatibility between combusting performance and heat exchange.

Moreover, formed on an outer periphery of the combustion chamber 53 is a plurality of fins for heat changes. Each fin 75 serves to dissipate heat generated upon combustion of mixed gas in the chamber 53 while transferring heat to the air streams delivered from the axial flow fan 23, that is, in a heat exchange effect. As the number of fins 75 increases, increased heat exchange efficiency is obtained, but this results in reduction in a surface area of a wind flow path to cause pressure loss to occur with the resultant decrease in air blasting. In this connection, tests for measurements on heat exchanges and efficiencies in an air blasting volume of hair driers were conducted and it was found out that the hair drier with eight fins 75 provided a favorable result with successful compatibility between the heat exchange and the air blasting volume.

With such a structure mentioned above, the gas tank 25 is replenished with LPG-mixed gas containing a main component of butane, and two dry batteries 27, serving as the power supply, are set in the hair drier 1 of the presently filed embodiment. The batteries can be replaceable and the gas tank 25 can be replenished with LPG from a commercially available small gas tank.

Now, description is made of the operation of the hair drier 1.

First, when the micro switch 45 is turned on, a signal is delivered to the switching amplifier 43, which delivers a command to the magnet unit 35 and the direct current motor 19 of the blower 17, commencing air blasting.

Next, as the operating lever 33 is depressed, the distal end of the control valve 31 is pulled upward to release gas, commencing gas supply. Due to conductance of the magnet unit 35, the operating lever 33 is attracted under a depressed condition to maintain a gas supply condition.

LPG is pushed out of the gas tank 25 due to gas pressure and passes through the control valve 31 and the gas supply pipe 29 to be supplied to the nozzle 59 of the ejector 7.

As shown in FIG 4, LPG passes across the filter of the nozzle 59 and is injected from the injection port 61, serving as the orifice, to the mixer 65 at a speed close to sonic speed. When this takes place, a negative pressure occurs in the mixer 65 due to the ejector effect and, hence, primary air (commensurate with air-fuel mixture), needed for combustion, is drawn through the air intake openings 13 to flow into the mixer 65. Inflow air is mixed with LPG to form mixed gas, which in turn is injected to the wick 67 at an area in front thereof. Accordingly, the mixer 65 allows primary air, needed for combustion, to be automatically drawn at a flow rate in proportion to variation in flow rate of LPG and, thus, no imperfect combustion takes place even in the presence of voltage drop in the battery.

In addition, since the wick 67 has the forward distal end provided with the straight movement restrictor 69, the combustion gas (mixed gas) is mainly ejected through the SUS metal mesh of the sidewall of the wick 67 at an area around a circumferential periphery of the metal mesh.

Then, upon depressing the ignition knob 39 of the ignition piezoelectric element 37, the high voltage electricity is delivered through the wiring 41 to the ignition plug 9 inside the combustor 11 to emit the sparks, thereby causing the mixed gas ejecting from the wick 67 to be ignited. Most of a combustion flame expands in a circular shape from the side surface of the wick 67 in a radially outward direction such that a length of the combustion flame stays in an area with a distance of approximately several tens millimeters from the wick 67, whereby hot blast passes along the inside and the eight recessed portions 71 on the inner wall of the primary combustion chamber 55 toward the secondary combustion chamber 57. When this takes place, the air streams (secondary air) delivered from the axial flow fan 23 pass through the eight secondary air delivery passages 73 disposed in the spaces among the eight recessed portions 71, resulting in reduction in the temperatures of the primary combustion chamber 55 at high efficiency.

Further, since the secondary air streams, which passes through eight secondary air delivery passages to be heated to high temperatures, are introduced to the secondary combustion chamber 57, combustion reactions are further promoted, resulting in improvement over combustion performance. That is, since gas, resulting from completed combustion in the primary combustion chamber 55, is mixed with high temperature secondary air, combustion reaction is enhanced, resulting in advantageous effects with the ease in complete combustion. This results in improvement over combustion performance.

Accordingly, with the chamber 53 of the presently filed embodiment, since most of unburned gases are combusted in the secondary combustion chamber 57, the presently filed embodiment takes a structure in which a flame is hard to be discharged to an outside of the chamber 53. Since the hair drier is an apparatus used for a human body, no flame is permitted to flow out of the outlet 15 of the casing 3 by any chance. Due to complete combustion taking place in the secondary combustion chamber 57, the flame disappears to provide a non-flame effect, reliably preventing the flame from going out of the outlet 15.

Further, due to heat exchange occurring on the plurality of heat-exchange fins 75 placed on the outside of the chamber 53, heat is radiated from the chamber 53, thereby allowing heat to be efficiently transferred to the air stream blown off from the axial flow fan 23.

Also, the chamber 53 with the substantially circular configuration set forth above is possible to be formed by die casting on a mass production basis, resulting in reduction in costs. Also, since the secondary air is introduced, the chamber 53 has increased heat-exchange efficiency. Especially, the inside of the primary combustion chamber 55 is cooled to prevent the temperature rise to high temperatures and aluminum, serving as material forming the chamber 53, becomes difficult to melt, making it possible to achieve the formation of a thin-walled configuration with the resultant improvement in a heat-exchange rate.

Further, since the hot blast temperatures, raised in the manner set forth above, are determined depending on a gas flow rate and a blast volume, specifications of the combustor 11 are determined to achieve a desired hot blast temperature. For instance, suppose that the gas flow rate lies at a value of 200cc/min, the blast volume is determined so as to achieve the desired hot blast temperature (of, for instance, $100°C\pm10°C$) under a situation where the combustor 11 is mounted to the hair drier 1. The blast volume is determined based on combined factors between the rotational speed of the direct current motor 19 and the axial flow fan 23 to be used.

Further, a large amount of negative ions is contained in hot blast ejected from the portable hair drier 1 of the presently filed embodiment. Therefore, a method of generating negative ions is described.

Fuel gas to be used is a generally used LPG that includes gas composed of main components of butane gas ($C_4H_{10}$) and propane gas ($C_3H_8$). Upon complete combustion reaction between butane gas and propane gas, carbon dioxide ($CO_2$) and steam ($H_2O$) are generated, resulting in gas after combustion with the formation of hot blast with steam.

The chemical reactions are expressed as:

In case of propane, a formula is expressed as:

$$C_3H_8 + 5O_2 \rightarrow 3CO_2 + 4\,H_2O$$

In case of butane, a formula is expressed as:

$$C_4H_{10} + 6.5\,O_2 \rightarrow 4CO_2 + 5H_2O$$

High temperature exhaust gases, containing steam as set forth above, turbulent flow occurs in the vicinity of the outlet of the chamber 53 and water molecules, activated at high temperatures, collide with each other, causing ionization to occur for thereby exhausting hot blast with a large volume of negative ions. In such a case, with the hair drier 1 of the presently filed embodiment, the presence of complete combustion provides increased combustion temperatures in contrast to that of the related art combustor. Thus, it is considered that the water molecules are activated in great molecular motions and intensive collisions of the molecules occur while the turbulent flows occur in the secondary combustion chamber 57 due to flow of secondary air whereby the negative ions are easily generated.

In this connection, the amount of negative ions, generated in a hair drier equipped with an ion generator disclosed in Japanese Patent Application No. 2002-191426, lies in a value of 2,000 to 2,500 units/cm$^3$ at a position with a distance of 15 cm from the outlet of the hair drier and a value of 500 to 1,000 units/cm$^3$ at a position with a distance of 30 cm from the outlet of the hair drier. On the contrary, with the portable hair drier 1 of the presently filed embodiment according to the present invention, negative ions are generated in a value of 90,000 to 100,000 units/cm$^3$, that is, 40 to 50 times that of the related art hair drier at a position with a distance of 15 cm from the outlet of the hair drier and a value of 70,000 to 90,000 units/cm$^3$, that is, 90 to 140 times that of the related art hair drier at a position with a distance of 30 cm from the outlet of the hair drier.

Also, due to complete combustion of mixed gas in the secondary combustion chamber 57, carbon monoxide, generated when LPG encounters incomplete combustion, is less in volume and carbon monoxide (CO), expelled from the outlet of the hair drier 1, lies at a minimized concentration. In this connection, the carbon monoxide concentration of the related art hair drier at a gas flow rate of 200 cc/min lies in a value greater than 900pm, but the carbon monoxide concentration of the hair drier of the presently filed embodiment lies in a value of 15ppm.

Further, a hot blast outlet temperature (at a central area) at a gas flow rate of 200 cc/min lies at a value of approximately 80°C at a position with a distance of 50 mm from the outlet of the chamber, a value of approximately 75°C at a position with a distance of 100 mm from the outlet of the chamber and a value of approximately 60°C at a position with a distance of 150 mm from the outlet of the chamber. On the contrary, with the presently filed embodiment, a hot blast outlet temperature (at a central area) lies at a value of approximately 180°C at a position with a distance of 50 mm from the outlet of the chamber, a value of approximately 130°C at a position with a distance of 100 mm from the outlet of the chamber and a value of approximately 90°C at a position with a distance of 150 mm from the cutlet of the chamber. Accordingly, the presently filed embodiment has remarkably higher heat exchange efficiency than that of the related art.

As mixed gas combusts in the chamber 53 of the combustor 11 in such a manner, the ignition sensor 49 mounted to the chamber 53 is warmed up. If the ignition sensor 49 detects a predetermined setting temperature within a fixed time interval, a signal is applied to the switching amplifier 43, which in turn causes the ignition confirmation LED 47 to light on for thereby enabling the confirmation of the ignition.

In contrast, if the micro switch 45 is turned off, the signal to the switching amplifier 43 is shut off, shutting off electric power to be supplied to the magnet unit 35 and the direct current motor 19 of the blower 17.

With the magnet unit 35 deenergized, the operating lever, which has been kept in the gas release state, is retracted from the magnet unit 35 and restored to its original position and the control valve 31 is closed to stop supplying gas, while turning off the direct current motor 19 that is consequently stopped supplying the blast.

Further, the presence of the magnet unit 35 mounted in the handle 5 provides capabilities to stop supplying gas under situations described below, providing a function as a safety device.

A first situation is involved in probabilities wherein a miss firing takes place or wherein gas combustion is interrupted due to some reasons. If the ignition sensor 49 does not reach the predetermined set value within a certain time interval regardless of attempts made to perform igniting operations, or if the temperature of the ignition sensor 49 is lower than the set temperature regardless of the presence of gas combustion, no signal is applied from the ignition sensor 49 to the switching amplifier 43.

Thus, in cases where the ignition sensor 49 generates no signal for a time interval exceeding a fixed time interval, the switching amplifier 43 delivers a command by which the magnet unit 35, the direct current motor19 and the ignition confirmation LED 47 are turned off. When this takes place, the operating lever 33, kept by the magnet unit 35, is released and the control valve 31 is closed, stopping the gas supply. At the same time, the direct current motor 19 is stopped to interrupt supplying the blast, while lighting off the ignition confirmation LED 47.

Further, a second situation is involved in a probability wherein fuel gas runs down in use of the hair drier 1. Under such a situation, the occurrence of shortage of the fuel gas volume causes a drop in the combustion temperature or causes continuous combustion to become impossible to result in interruption in combustion and, hence, the ignition sensor 49 is cooled by the blast delivered from the blower 17 to cause the temperature of the ignition sensor 49 to be lowered than the set temperature, causing the signal of the ignition sensor 49 to the switching amplifier 43 to be blocked. Accordingly, the hair drier 1 is brought into a completely inoperative condition as set forth in conjunction with the first situation.

Further, as a third situation, a probability occurs wherein the hot blast temperatures raise to a high temperature in use of the hair drier 1 to cause the hot blast temperatures to exceed the set temperature. With the hot blast temperatures exceeding the set temperature in such a way, the internal contacts of the hot blast excessive temperature are separate from each other, thereby interrupting the signal to the signal amplifier 43.

As the signal from the hot blast overheat sensor is interrupted, the energization of the magnet unit 35 is immediately interrupted due to the command from the switching amplifier 43, shutting off the gas supply. Also, the direct current motor 19 is turned on for a predetermined fixed time interval to cool the overheated hot blast due to the blast of the blower 17, upon which the blower 17 is stopped. Thus, the hair drier 1 is brought into a completely halt condition.

Further, as a fourth situation, a probability occurs wherein a remaining battery level of a battery is lowered in use of the hair drier 1. Under such a situation, the output voltage of the batteries 27 is detected by the switching amplifier 43 and if the battery level becomes less than a predetermined level, the magnet unit 35 and the direct current motor 19 are turned off, thereby stopping both the gas supply and blast. Consequently, the hair drier 1 is brought into a completely halt condition.

As set forth above, due to the presence of the magnet unit 35 incorporated in the hair drier 1, the gas supply can be easily stopped in the occurrence of urgent situations, enabling the hair drier 1 to be maintained in safety.

Also, the gas combustion type portable drier of the present invention may have applications not only for the hair drier of the presently filed embodiment mentioned above but also a heat gun for use in constricting work on a heat shrinkable tube, drying, bonding, dissolving and soldering.

## INDUSTRIAL APPLICABILITY

As understood from the foregoing description, according to the aspect of the present invention, since the ejector generates the negative pressure due to the ejector effect caused by the ejecting speed of combustion gas, air required for combustion can be automatically drawn in proportion to the variation in fuel gas. Accordingly, even if the voltage drop occurs in the batteries with a resultant decrease in the flow rate of blast generated by the blower, imperfect combustion can be avoided.

In addition, since gas, resulting from combustion in the primary combustion chamber, is mixed with secondary air in the secondary combustion chamber to provide the ease of combustion reaction for thereby promoting complete combustion, resulting in an improvement in combustion performance. As a result, the presence of improved combustion performance enables reduction in fuel gas consumption.

Further, according to the present invention, since the air stream delivered from the blower passes through the secondary air delivery passages, enabling reduction in temperatures of the primary chamber. In addition, since secondary air, which has been heated to the high temperatures, are introduced to the secondary combustion chamber through the secondary air delivery passages, gas, whose combustion is completed in the primary chamber, and the high temperature secondary air are mixed to allow mixed gas to be easily combusted with the resultant increase in combustion performance.

Furthermore, according to the present invention, when the ignition detector detects the absence of ignition, the switching controller deenergizes the magnet unit to stop supplying fuel gas, while enabling to stop supplying the blast from the blower. In an alternative, when the overheat detector detects the presence of the overheated condition of hot blast heated by the combustor, the switching controller is made operative to deenergize the magnet unit to stop supplying fuel gas and the blower is made operative to continue supplying the blast for the given time interval for cooling the combustor upon which the combustor can be stopped in operation.

Moreover, according to the present invention, combustion reaction of LPG, composed of gases composed of main components such as butane gas and propane gas, takes place, carbon dioxide and steam are generated and gases after combustion forms hot blast containing steam. High temperature gases with steam are completely combusted in the secondary combustion chamber to provide increased high temperatures, whereby water molecules are activated. When this takes place, the turbulent flows occur in the secondary combustion chamber due to flow of secondary air to allow the water molecules to collide with each other, enabling the generation of a large amount of negative ions. Also, since the secondary combustion chamber achieves perfect combustion, minimizing a concentration of carbon monoxide.

## Claims

1.   A gas combustion type hair drier comprising:

    a gas tank in which fuel gas is stored;
    a combustor including a primary combustion chamber, combusting mixed gas with the fuel gas, supplied from the gas tank, and primary air, and a secondary combustion chamber to which gases, resulting from combustion in the primary combustion chamber, and secondary air are supplied for combustion;
    a blower blowing off air, heated in the combustor, to an outlet of a tubular casing in which the combustor is mounted;
    a power supply rotating a motor of the blower;
    an ignition device igniting the fuel gas; and
    an ejector that draws the primary air into a gas flow path, leading from the gas tank to the combustor, due to a negative pressure caused by a flow speed of the fuel gas supplied to the combustor.

2.   The gas combustion type hair drier according to claim 1, wherein the combustor has a tubular section, with a substantially circular cross-section, which is disposed between the blower and the outlet and has a plurality of fins that form air flow passages between an outer peripheral surface of the combustor and an inner peripheral surface of the casing, and the combustor includes the primary combustion chamber, disposed in the tubular section, the secondary combustion chamber disposed in a forward area of the tubular section, a gas combusting section disposed in a central area of the primary combustion chamber, a plurality of recessed portions formed on an inner wall of the primary combustion chamber and extending in a fore and aft direction, and a plurality of secondary air delivery passages through which the secondary air is supplied to the secondary combustion chamber.

3.   The gas combustion type hair drier according to claim 2, wherein the gas combusting section has a forward end on which a mixed gas straight movement restrictor is disposed.

4. A gas combustion type hair drier comprising:

a gas tank in which fuel gas is stored;
a combustor combusting the fuel gas supplied from the gas tank;
a blower blowing off air, heated in the combustor, to an outlet of a tubular casing in which the combustor is mounted;
a power supply rotating a motor of the blower;
an ignition device igniting the fuel gas;
a magnet unit operative to keep a supply of the fuel gas to a gas flow path leading from the gas tank to the combustor;
an ignition detector detecting an ignited condition depending on an external wall temperature of the combustor;
an overheat detector detecting an overheated condition of hot blast resulting from the combustion chamber; and
a switching controller operative to control the magnet unit and operation of the blower in response to detection signals delivered from the ignition detector and the overheat detector.

5. The gas combustion type hair drier according to claim 4, wherein the switching controller is operative to shut off the magnetic unit to stop supplying the fuel gas while stopping a supply of a blast from the blower when the ignition detector detects an absence of the ignition or shut off the magnet unit to stop supplying the fuel gas and continuing to supply the blast from the blower for a fixed time interval for cooling the combustor while subsequently stopping the operation of the combustor when the overheat detector detects that the hot blast, heated in the combustor, remains in the overheated condition.

6. A method of generating negative ions in a gas combustion type hair drier which has a gas tank in which fuel gas is stored, a combustor including a primary combustion chamber, which combusts mixed gas with the fuel gas, supplied from the gas tank, and primary air, and a secondary combustion chamber for combustion of gases, resulting from combustion in the primary chamber, and supplied secondary air, and an ignition device by which the fuel gas is ignited, the method comprising:

mixing the fuel gas and the primary air to form the mixed gas for ejecting the same to the primary combustion chamber;
permitting the ejected mixed gas to be combusted in the primary combustion chamber with the ignition device;
permitting gases, resulting from combustion in the primary chamber, to be supplied to the secondary combustion chamber and mixed with the secondary air for complete combustion while causing turbulent flows to occur; and
activating molecular motions of a large number of water molecules generated upon combustion of the fuel gas thereby generating the negative ions.

# FIG.1

# FIG.2

# FIG.3

## FIG.4

PRIMARY AIR
SECONDARY AIR
AIR STREAM

75 3 73 (55) 61 21 23

(57)
71
73
15
71
73
71
63
59
7
29
19

53 11 69 9 67 65 LPG

PRIMARY AIR
SECONDARY AIR
COMBUSTION FLAME
AIR STREAM

57 55

## FIG.5

75
73 75
71 73
3 71 73
11
75
71
COMBUSTION FLAME
67 9 53 75 73

## INTERNATIONAL SEARCH REPORT

| | International application No. |
|---|---|
| | PCT/JP03/10746 |

A. CLASSIFICATION OF SUBJECT MATTER
    Int.Cl⁷  A45D20/06

According to International Patent Classification (IPC) or to both national classification and IPC

B. FIELDS SEARCHED

Minimum documentation searched (classification system followed by classification symbols)
    Int.Cl⁷  A45D20/06

Documentation searched other than minimum documentation to the extent that such documents are included in the fields searched
    Jitsuyo Shinan Koho          1922–1996   Toroku Jitsuyo Shinan Koho    1994–2003
    Kokai Jitsuyo Shinan Koho    1971–2003   Jitsuyo Shinan Toroku Koho    1996–2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 8-342 A  (Matsushita Electric Industrial Co.,<br>Ltd.),<br>09 January, 1996 (09.01.96),<br>Full text; Figs. 1 to 7<br>(Family: none) | 1-2<br>3-6 |
| A | JP 2002-65344 A  (Kabushiki Kaisha Kyan),<br>05 March, 2002 (05.03.02),<br>Full text; Figs. 1 to 2<br>(Family: none) | 6 |

☐ Further documents are listed in the continuation of Box C.      ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 November, 2003 (25.11.03) | 09 December, 2003 (09.12.03) |

| Name and mailing address of the ISA/ | Authorized officer |
|---|---|
| Japanese Patent Office | |
| Facsimile No. | Telephone No. |

Form PCT/ISA/210 (second sheet) (July 1998)